# EUROPEAN PATENT SPECIFICATION

(11) **EP 0 624 605 B1**
(45) Date of publication and mention of the grant of the patent: **05.08.1998**
(21) Application number: 94107317.3
(22) Date of filing: 10.05.1994
(51) Int. Cl.: C08F 212/14, C09D 125/18

(54) **Copolymeric aminoplasts, method of producing and use of same**
Aminoplast Copolymere, Verfahren zu deren Herstellung und deren Verwendung
Aminoplastes copolymères, procédé de leur préparation et leur usage

(30) Priority: 10.05.1993 US 58085; 14.03.1994 US 213312; 13.05.1993 US 60135
(43) Date of publication of application: 17.11.1994
(73) Proprietor: CYTEC TECHNOLOGY CORP., West Paterson New Jersey 07424 (US)
(72) Inventor: Szita, Jeno George, Norwalk, Connecticut 06850 (US); Lees, Robert Gerald, Stamford, Connecticut 06905 (US)
(74) Representative: Diehl, Hermann, Dr. Dipl.-Phys.

(56) References cited:
- EP-A- 0 203 879
- US-A- 3 290 350
- US-A- 5 106 993

## Description

The present invention relates to copolymeric aminoplasts methods of producing same and use of same as e.g. crosslinking agents particularly in the coating field.

To effectively crosslink with a variety of widely available difunctional materials such as diols, dicarboxylic acids, dimercaptans, and diamides, a monomeric crosslinking agent is required to have a functionality effective for crosslinking of greater than two, and preferably at least 3. In many cases, however, even trifunctional aminoplast crosslinking agents do not give rise to sufficient crosslinking density in cured films or objects due to incomplete reaction of the functional groups, and as a result, cured films with inferior physical and resistance properties are obtained.

The problem of insufficient crosslinking density may be overcome by using a higher functional aminoplast crosslinker such as hexamethoxymethyl melamine. In these cases, however, the films obtained sometimes have low flexibility due to the somewhat rigid network produced in the films upon cure.

The above-identified problems of insufficient crosslinking of the low functionality crosslinkers and the low flexibility of the highly functional crosslinkers may be overcome by using typically tetrafunctional guanamine-derived aminoplast crosslinking agents. However, guanamine-derived crosslinkers are more difficult and more costly to prepare than melaminederived crosslinkers. Furthermore, some guanamine crosslinkers such as N,N,N',N'-tetraalkoxymethylbenzoguanamines may have insufficient resistance properties for certain applications, and generally have inferior stability towards the degradative action of ultraviolet light.

It is therefore the object of the present invention to provide copolymeric aminoplasts useful as crosslinking agents and a method of producing same, which copolymeric aminoplasts avoid the above described drawbacks of known products. This object is solved by the copolymers according to independent claims 1 and 8, the method according to independent claim 14, the curable composition according to independent claim 17 and the method for coating a substrate according to independent claim 19. Further advantageous features, aspects and details of the invention are evident from the dependent claims, the description and examples.

This invention relates generally to a novel class of functional copolymers and derivatives thereof which can be used as aminoplast crosslinking agents in a variety of fields, and particularly in the coating field.

The present invention, therefore, provides new polyfunctional, amino resin derived, copolymeric crosslinking agents which are capable of self crosslinking or crosslinking with active hydrogen containing materials thereby producing, upon cure, films which have good acid resistance properties, environmental etch resistance, and a good balance of hardness and flexibility.

In its overall aspect, the present invention provides a novel highly functional copolymer which can function as an effective aminoplast crosslinking agent, or from which effective aminoplast crosslinking agents can be derived. More specifically, the copolymers of the present invention comprise repeating units derived from (i) a monoadduct of an isopropenyl-alpha, alpha-dimethylbenzyl isocyanate and an amino compound; and (ii) an ethylenically unsaturated compound capable of copolymerizing with said monoadduct. The aminoplast crosslinking agents in accordance with the present invention are the alkylolated and/or alkoxyalkylated derivatives of these copolymers.

In general, the present copolymers are prepared by the copolymerization of (1) an unsaturated monoadduct of an amino compound and isopropenyl-alpha,alpha-dimethylbenzyl isocyanate ("TMI"), with (2) a suitable unsaturated comonomer. The crosslinking agents are the alkylolated and, optionally, etherified versions of the copolymer, which may be accomplished prior or subsequent to the aforementioned copolymerization.

The present invention also provides a curable composition comprising the copolymeric aminoplast crosslinking agent and, optionally, an active hydrogen group-containing resin, as well as a method of coating using this curable composition and a cured film or object prepared thereby.

These and other features and advantages of the present invention will be more readily understood by those skilled in the art from a reading of the following detailed description.

As indicated above, the copolymeric aminoplast crosslinking agent of the present invention is a partially or fully alkylolated and/or alkoxyalkylated, preferably a partially or fully methylolated and/or alkoxymethylated, copolymer of a TMI/amino compound monoadduct and an ethylenically unsaturated compound capable of copolymerizing therewith.

As utilized herein, the term "amino compound" refers to non-polymeric nitrogen containing compounds and derivatives thereof which are commonly utilized as crosslinking agents in coatings application. Such amino compounds are selected from the group consisting of melamines, guanamines such as benzo-, aceto-, and cyclohexylcarbo- guanamines, glycolurils and ureas, as well as the at least partially N-alkylolated and N-alkoxyalkylated derivatives thereof. The term "amino compound" also includes the oligomers of such amino compounds.

As suitable melamine and melamine derivatives (collectively referred to as melamines) may be mentioned those of the following general formula 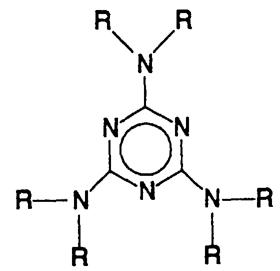 wherein each R is independently selected from H, an alkylol group and an alkoxyalkyl group. Preferred melamines are those wherein each R is independently selected from H, a methylol group and an alkoxymethyl group having from 1 to 6 carbon atoms in the alkoxy group.

As suitable guanamines and guanamine derivatives (collectively referred to as guanamines) may be mentioned those of the following general formula 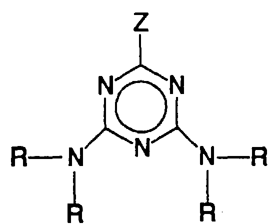 wherein Z is selected from H, an alkyl group of from 1 to 20 carbon atoms, an aryl group of from 6 to 20 carbon atoms, and an aralkyl group of from 7 to 20 carbon atoms, and wherein each R is independently selected from H, an alkylol group and an alkoxyalkyl group. Preferred guanamines are those wherein each R is independently selected from H, a methylol group and an alkoxymethyl group having from 1 to 6 carbon atoms in the alkoxy group, and particularly wherein Z is selected from a phenyl group (benzoguanamines), a methyl group (acetoguanamines) and a cyclohexyl group (cyclohexylcarboguanamines).

As suitable glycolurils and glycoluril derivatives (collectively referred to as glycolurils) may be mentioned those of the following general formula 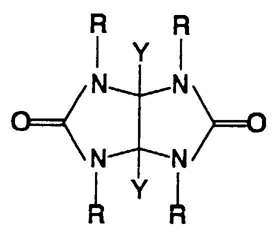 wherein Y is selected from H, an alkyl group of from 1 to 20 carbon atoms, an aryl group of from 6 to 20 carbon atoms, and an aralkyl group of from 7 to 20 carbon atoms, and wherein each R is independently selected from H, an alkylol group and an alkoxyalkyl group. Preferred glycolurils are those wherein each R is independently selected from H, a methylol group and an alkoxymethyl group having from 1 to 6 carbon atoms in the alkoxy group, and particularly wherein Y is selected from H and a methyl group.

As suitable ureas and urea derivatives (collectively referred to as ureas) may be mentioned those of the following general formula 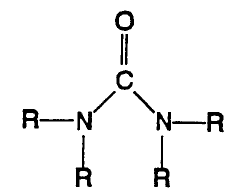 wherein each R is independently selected from H, an alkylol group and an alkoxyalkyl group. Preferred ureas are those wherein each R is independently selected from H, a methylol group and an alkoxymethyl group having from 1 to 6 carbon atoms in the alkoxy group.

The TMI/amino compound monoadduct may be prepared by contacting TMI with an amino compound or a mixture of amino compounds. TMI, or isopropenyl-alpha, alpha-dimethylbenzyl isocyanate, has the following general formula 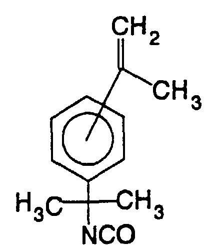 Preferred is the meta- isomer (m-TMI), the para- isomer (p-TMI), or a mixture of the meta- and para- isomers (m/p-TMI). The meta- isomer is available commercially from Cytec Industries Inc., West Paterson, New Jersey, under the trade name TMI® (meta) Unsaturated Aliphatic Isocyanate. The para- isomer may be prepared by procedures described in U.S. Patent Nos. 3290350, 4130577, 4377530 and 4439616, all of which are incorporated herein by reference as if fully set forth.

The preparation of a TMI/melamine adduct is disclosed in the commonly owned, US-A-5 294 671 filed 13 May 1993. The TMI/amino compound monoadducts of amino compounds other than melamine can be produced in a substantially identical manner.

Generally, the TMI/amino compound adduct may be prepared by contacting TMI with the amino compound in a solvent having a high boiling point, a high dipole moment, and a high dielectric constant, at a temperature and for a length of time to produce a 1:1 adduct. The adduct is then isolated by cooling the reaction mixture and filtering the precipitated adduct. The adduct thus obtained is substantially monomeric (monounsaturated functional) and is suitable for use as the starting monomer in the preparation of copolymer intermediates from which the copolymeric aminoplasts of the invention are prepared.

Preferably, the monoadduct of TMI and the amino compound is prepared using a substantially stoichiometric (about 1:1) molar ratio of the TMI to amino compound, which is normally preferred on the basis of reaction stoichiometry. However, the adduct-forming reaction may be carried out at any ratio. For example, if a TMI to amino compound molar ratio of 0.5:1 is used, there will remain a large excess of unreacted amino compound which may be separated from the product, which product is necessarily a 1:1 adduct. If, on the other hand, excess quantities of TMI such as a 5:1 molar excess are used, only the monoaddition product is obtained under the process conditions described herein. The unreacted TMI in this case may be easily removed by precipitation of the product.

It is preferred to utilize an amino compound wherein at least one R group is H, more preferably wherein both R groups on at least one pendant nitrogen are H, and preferably wherein all R groups are H.

The preferred solvents for the reaction are aprotic solvents having relatively high boiling points, high dipole moments, and high dielectric constants for facilitating the dissolution of the more sparingly soluble amino compounds at the reaction temperature and for allowing the product to crystallize at ambient temperatures. The preferred solvent is dimethylsulfoxide; however, solvents such as N,N-dimethylformamide, N-methylpyrrolidone, N,N-dimethylacetamide, sulfolane, hexamethylphosphorus triamide (HMPT), hexamethylphosphoramide (HMPA), and mixtures thereof may also be used. Any solvent to reactant ratio may be used to prepare the TMI/amino compound monoadducts. The preferred range of the solvent to reactant ratio is from 1:1 to 3:1. Most preferably, the ratio is 2:1.

The preferred temperature for carrying out the monoaddition reaction is in the range from 80 °C to 150 °C. At temperatures lower than 80 °C, the reaction proceeds at a very slow rate. At temperatures higher than 150 °C, side reactions, including decomposition of the solvent and TMI reactant, may become significant. A temperature in the range of 100 °C to 120 °C is most convenient to prepare the TMI/amino compound monoadduct.

The preferred time for carrying out the monoaddition reaction is in the range of from 12 minutes to 28 hours depending, of course, on the other reaction components and conditions. Assuming that a stoichiometric or less than stoichiometric amount of TMI is utilized, then it is preferred to continue the reaction until substantially all of the available isocyanate groups have been consumed.

After the monoaddition reaction, the monoadduct may be isolated by cooling the reaction mixture and filtering the precipitated product. The product may be further purified by washing it with an organic solvent capable of dissolving the solvent used in the process of the invention. An example of a solvent usable for this purpose is tetrahydrofuran.

Other reaction details had been referred to the aforementioned incorporated US-A-5 294 671.

The preferred TMI/amino compound monoadducts thus prepared may be represented by the following general formula: 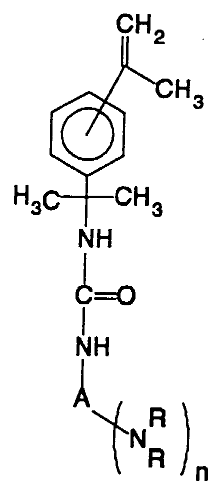 wherein A is the amino compound core, R is as defined above, and n is dependent upon the particular type of amino compound. For example, if the amino compound is melamine, then A is a 1,3,5-triazine core, all of the R groups are H and n is 2. If the amino compound is benzoguanamine, then A is a 2-phenyl-1,3,5-triazine core, all R groups are H and n is 1.

The copolymers of the present invention comprise repeating units derived from (i) the aforementioned monoadduct and (ii) an ethylenically unsaturated compound capable of copolymerizing with such monoadduct.

The ethylenically unsaturated comonomers from which the copolymeric aminoplasts of the invention may be prepared are comonomers represented by the formula: 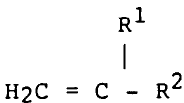 wherein R¹ and R² are the same or different and are independently selected from the group consisting of hydrogen, cyano, halo such as chloro, alkoxy, acetoxy, acyl, aminocarbonyl, N-alkylaminocarbonyl, N,N-dialkylaminocarbonyl, aryl, alkoxycarbonyl of 1 to 20 carbon atoms, aryloxycarbonyl of 6 to 20 carbon atoms, and aralkyloxycarbonyl of 7 to 20 carbon atoms.

Suitable comonomers include the following classes of monosubstituted and vicinally or geminally disubstituted unsaturated compounds: vinylidenes, vinyl halides, vinylidene halides, vinyl carboxylates, vinyl ethers, alpha, beta- unsaturated aldehydes and ketones, styrenes, alpha-methyl styrenes, fumarate and maleate esters, acrylic and methacrylic acid amides, acrylic and methacrylic nitriles, and acrylic and methacrylic esters. Suitable comonomers include the following unsaturated compounds: methylene valerolactone, vinyl chloride, vinylidene chloride, vinyl acetate, hexyl vinyl ether, methyl vinyl ketone, maleimide, N-substituted maleimides, acrolein, styrene, alpha-methylstyrene, para-methyl styrene, acrylamide, methacrylamide, acrylonitrile, methacrylonitrile, dimethyl fumarate, dimethyl maleate, maleic anhydride, methyl acrylate, methyl methacrylate, ethyl acrylate, butyl acrylate, butyl methacrylate, ethylhexyl acrylate, ethylhexyl methacrylate, beta-hydroxyethyl acrylate, beta-hydroxyethyl methacrylate and beta- and gamma- hydroxypropyl acrylate and methacrylate.

Preferred of the above may be mentioned the following:
A. monosubstituted olefins such as acrylate esters illustrative of which are methyl acrylate and butyl acrylate; vinyl nitriles such as acrylonitrile; vinyl carboxylates such as vinyl acetate; vinyl halides such as vinyl chloride; aromatic olefins such as styrene and acrylic amides such as acrylamide;
B. 1,1 - disubstituted olefins such as methacrylate esters illustrative of which are methyl methacrylate and butyl methacrylate; methacrylic amides such as methacrylamide; methacrylonitrile and vinylidene chloride;
C. 1,2 - disubstituted olefins such as dialkyl esters of fumaric and maleic acids, esters of cinnamic acids, maleic anhydride, maleimide, N-methyl maleimide and N-phenyl maleimide, and
D. more highly substituted olefins which are sufficiently reactive to undergo copolymerization with the monoadduct.

The mono- and disubstituted olefins and mixtures thereof are especially preferred. Particularly preferred of these are acrylate and methacrylate esters derived from alcohols of 1 to 20 carbon atoms. Most preferred are acrylate and methacrylate esters derived from 1 to 8 carbon alcohols, and especially butyl acrylate and methyl methacrylate.

The copolymer in accordance with the present invention can be prepared by well-known procedures for polymerizing ethylenically unsaturated components. Preferably, such copolymers are prepared by the steps of:
(a) dissolving, in a liquid medium, the aforementioned TMI/amino compound monoadduct;
(b) adding to said monoadduct solution (i) an unsaturated comonomer, and (ii) a free radical initiator; and
(c) maintaining the reaction mixture at a temperature and for a length of time sufficient to copolymerize at least 90 weight percent of the adduct and the comonomer reactants.

The liquid medium in step (a) usable in the reactor charge is typically a solvent selected from the group consisting of alcohols, ketones, ethers, esters, aromatic hydrocarbons, halogenated hydrocarbons, N-methyl pyrrolidone, N,N-dimethylformamide, N,N-dimethylacetamide, and mixtures thereof. Of these solvents, N-methyl pyrrolidone is preferred.

A chain transfer agent may be optionally added to the monoadduct to limit molecular weights, which is typically a mercaptan and is selected from a group consisting of dodecyl mercaptan, butyl mercaptan, mercaptoacetic acid, and 2-mercapto-ethanol. Dodecyl mercaptans are preferred. The 2-mercaptoethanol chain transfer agent is particularly preferred in cases where hydroxy-terminated copolymers are desirable. The concentration of the chain transfer agent in the reactor charge is typically from 0.001 to 10 weight percent.

The free radical initiator (ii) in the reactor charge is selected from the group consisting of peresters, alkyl peroxides, acyl peroxides, percarbonates, and azobisnitriles. Of these, peresters are preferred, tertiary butyl peroctoate and tertiary amylperoctoate being the most preferred free radical initiators. The addition of ingredients (i) and (ii) in step (b) may be carried out sequentially or simultaneously, as desired, to control the molecular weight and the composition of the polymer.

The molecular weight of the polymer can be further controlled by controlling the radical initiator and chain transfer agent concentrations such that, when lower levels of either or both are employed, higher molecular weight polymers are obtained. In an opposite sense, when lower molecular weight polymers are desired, higher levels of either or both reagents are used. The molecular weight may be further controlled by varying the temperature and the monomer concentrations.

The temperature of the reaction zone in steps (b) and (c) is preferably from 50 °C to 150 °C. Selection of a specific temperature depends on the half-life, at said selected temperature, of the free radical initiator chosen for the process. In the preferred peroctoate initiator case, a temperature of 125 °C to 130 °C is preferred.

The polymerization time, in itself, is not critical, and may vary from 30 minutes to as much as 24 hours. There should be, however, sufficient time to polymerize at least 90 weight percent, and preferably more than 95 weight percent of the monomer and comonomers of the reaction charge.

The ratio of the monomer to comonomer in the reactor charge depends on the composition desired for the copolymer intermediate. To prepare the preferred low molecular weight copolymer intermediates of this invention, a monomer/comonomer ratio of from 0.01:1 to 1:1 is preferred.

The concentration of the liquid medium in step (c) in the reactor charge is preferably from 20 weight percent to 80 weight percent, and the ratio of the liquid medium to total remaining ingredients of the reactor charge is preferably from 0.25 to 4.0.

The preferred copolymers so produced as described above comprise a plurality of the same or different segments represented by the following formula: 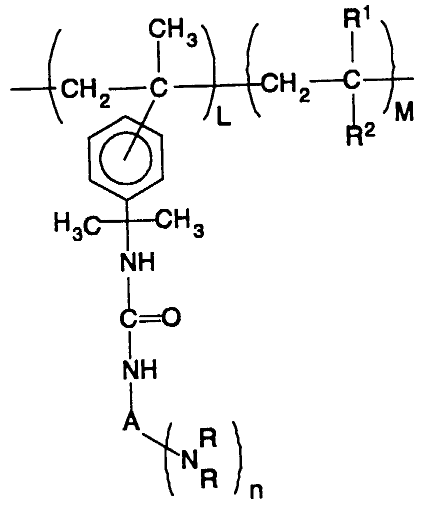 wherein L and M are the same or different integers, each independently having a value of at least 1, and wherein each R, R¹ and R² is as defined above.

The preferred copolymers of the invention have a molecular weight (weight average) in the range of from 500 to 20,000, although higher molecular weights are also usable.

The copolymers produced as described above may in and of themselves function as crosslinking agents when at least a portion of the R groups thereof are selected from alkylol and alkoxyalkyl groups, and preferably from methylol and alkoxymethyl groups containing from 1 to 6 carbon atoms in the alkoxy group. Especially preferred is the case wherein substantially all of the R groups are alkoxymethyl groups having from 1 to 6 carbon atoms in the alkoxy group, for example, methyloxymethyl, ethyloxymethyl, 1-propyloxymethyl, 2-propyloxymethyl, 1-butyloxymethyl, 2-butyloxymethyl, isobutyloxymethyl, 1-pentyloxymethyl, 1-hexyloxymethyl and cyclohexyloxymethyl.

In the event that the copolymers contain no such alkylol or alkoxyalkyl groups (all R groups are H), or insufficient R substitution to effectively function as a crosslinking agent, then the remaining =NH (R = H) groups can readily be converted via procedures well-known in the field of aminoplast crosslinkers.

Preferably, the copolymer is hydroxymethylated (or methylolated) with 1 to 30 moles, and preferably 1 to 20 moles, of formaldehyde per mole of the monoadduct added in the reaction mixture, typically in water or an alcohol, or in a mixture of water and an alcohol such as normal butanol (n-butanol). The methylolation is typically carried out under basic conditions, such as at pH 7.5 to 10, although acidic conditions may also be employed. The methylolated product thus obtained may be used as such as a crosslinking agent or may be etherified with an alcohol, and preferably with a 1 to 6 carbon alcohol under acidic conditions, typically at a pH range from about 0.5 to 6.0, and preferably from 2 to 4. The alcohol used to etherify the hydroxymethylated copolymeric aminoplast is usually used in a large excess to ensure a high degree of etherification and also to avoid self-crosslinking during the etherification. Therefore, the alcohol used for etherification typically is the reaction solvent.

When a mixed alkoxymethylated aminoplast is desirable, a mixture of alcohols may be used both as reactant and as solvent. The preferred alcohols are methanol, ethanol, 1-propanol, 2-propanol, 1-butanol, 2-butanol, isobutanol, 1-pentanol, 1-hexanol, cyclohexanol, and mixtures thereof.

The copolymeric aminoplast crosslinking agent of the invention may be further purified or may be used in the unpurified state. Furthermore, the reaction product may be concentrated by removing volatiles by evaporation or distillation to achieve a desired solids level or viscosity.

The novel copolymeric aminoplast crosslinking agents of the invention may be used as crosslinking agents in curable compositions to produce, upon curing, crosslinked films or objects useful in coatings, adhesives, conventional moldings, reactive injection moldings, composites, binders and others. They may also be used by themselves as self-crosslinking film formers.

The curable compositions of the present invention comprise a copolymeric aminoplast crosslinking agent as described above. Depending upon the ultimate use of such curable compositions, they may also contain one or more of a polyfunctional active hydrogen-containing material, a cure catalyst, and other additives well-known for the desired end use.

When no polyfunctional active hydrogen-containing material is present, the curable composition is a self-curing system, and when cured with or without an acid catalyst, it produces cured or crosslinked films or objects with good physical properties, as exemplified herein below in Example 4.

The polyfunctional materials usable in the invention are polyfunctional active hydrogen-containing materials including, for example, polymercaptans, polycarboxylic acids, polyamines, polyamides, epoxy or urethane prepolymers, alkyds, and polyols such as acrylic resins containing pendant or terminal functionalities, polyester resins with pendant or terminal functionalities and polyhydric alcohols. These are described in greater detail below.

The polyfunctional materials or resins used in the compositions of the invention have a molecular weight (weight average) of from 60 to 500,000 and comprise at least one class of an active hydrogen functionality selected from the group consisting of hydroxy, carboxy, amido, mercapto, and a group convertible thereto.

Preferred are the hydroxyfunctional polyfunctional materials having molecular weights in the range of from 500 to 50,000, and hydroxyl group equivalent weights of from 200 to 4,000. Low molecular weight multi-functional compounds such as diols, triols, may also be used.

An example of a suitable polyfunctional polyester resin usable in the curable compositions of this invention is OXYESTER® Z 1439 Branched Polyester Resin, a product of Chemische Werke Hüls AG, Germany, having the following physical and chemical properties:

| | |
|---|---|
| Hydroxyl Content (% by weight) | 2 |
| Hydroxyl Number | 65 |
| Equivalent Weight | 863 |
| Solids Content (% by weight) | 50 |

Another example of a suitable polyfunctional polyester resin particularly suited for use in coil coatings is CYPLEX® 1531 modified Polyester Resin, a product of Cytec Industries Inc., West Paterson, New Jersey, having the following physical and chemical properties:

| | | |
|---|---|---|
| Solids | (Weight %) | 60 |
| | (Volume %) | 52.9 |
| Color (Gardner 1963) | | 6 (max.) |
| Viscosity (Gardner-Holt, 25 °C) | | Y-Z₂ |
| Hydroxyl Number (solids) | | 30 |
| Equivalent Weight (solids) | | 1,870 |
| Molecular Weight, approximate | | 4,000 |
| Acid number (solids) | | 10 (max.) |
| Solvesso 150 Aromatic Hydrocarbon Solvent (%) (a product of Humble Oil and Refining Company) | | 40 |

Another example of a suitable polyfunctional resin for coil coating is CYPLEX® 1538 Modified Polyester Resin, a product of Cytec Industries Inc., West Paterson, New Jersey, having the following properties:

| | | |
|---|---|---|
| Solids | (Weight %) | 65 |
| | (Volume %) | 58 |
| Color (Gardner 1963) | | 6 (max.) |
| Viscosity (Gardner-Holt, 25°C) | | Z₁ - Z₃ |
| Hydroxyl Number (solids) | | 40 |
| Equivalent Weight (solids) | | 1,400 |
| Molecular Weight, approximate | | 2,800 |
| Acid | number (solids) | 10 (max.) |
| Solvesso 150 Aromatic Hydrocarbon Solvent (%) | | 35 |

Another example of a suitable polyfunctional resin particularly suited to coil coatings is CYPLEX® 1546 Oil-Free Polyester Resin, a product of Cytec Industries Inc., West Paterson, New Jersey, having the following properties:

| | |
|---|---|
| Non-Volatiles (weight %) | 70 ± 2 |
| Color (Gardner 1963, max.) | 4 |
| Viscosity (Gardner-Holt, 25 °C) | Z₁ - Z₃ |
| Acid Number (resin solids, max) | 10 |
| Hydroxyl Number (resin solids) | 35 - 40 |
| Equivalent Weight | 1,400 - 1,600 |

An example of a suitable acrylic resin for non-coil coating application is JONCRYL® 500 Acrylic Resin, a product of S.C. Johnson and Son, Inc., Racine, Wisconsin, having the following properties:

| | |
|---|---|
| Solids Content (Weight %) | 80 |
| Viscosity at Room Temperature (mPa·s (Centipoise)) | 4,000 (4,000) |
| Hydroxyl Number (based on solids) | 140 |
| Equivalent Weight (based on solids) | 400 |
| Molecular Weight (Mn)* | 1,300 |
| Polydispersity (Mw/Mn)** | 1.7 |

| | |
|---|---|
| *Mn = Number Average Molecular Weight | |
| **Mw = Weight Average Molecular Weight | |

ARAKOTE® 3109 Hydroxy-Terminated Polyester Resin, a product of Ciba-Geigy Corporation, Hawthorne, New York, is an example of a solid polyester resin particularly suitable to powder coating, and has the following physical and chemical properties:

| | |
|---|---|
| Hydroxyl Number | 27 - 32 |
| Equivalent Weight | 1,900 |
| Tg (Glass Transition, °C) | 66 |
| ICI Viscosity at 200 °C (mPa·s (Poise)) | 4000 (40) |
| Appearance | Colorless Solid |

JONCRYL® SCX-800 A Acrylic Resin and JONCRYL® SCX-800 B Acrylic Resin, products of S.C. Johnson and Son, Inc., examples of solid acrylic resins, also are suitable for powder coatings, and have the following physical and chemical properties:

| | SCX-800A | SCX-800B |
|---|---|---|
| Non-Volatiles (Weight %) | 98 | 97 |
| Hydroxyl Number | 43 | 40 |
| Equivalent Weight | 1300 | 1402 |
| Acid Value (mg KOH/g) | 15 | 15 - 20 |
| Tg (Glass Transition, °C) | 43 | 43 |
| Softening Point (°C) | 100 | 107 |
| ICI Viscosity at 200 °C (mPa·s) | 2500 | 4500-5000 |
| (Poise) | (25) | (45 - 50) |

In addition to the examples cited above, a variety of commercial polyester, acrylic, and polyurethane resins may be used as the polyfunctional ingredient of the invention, provided such resins have suitable chemical and physical properties similar to those set forth above for the polyfunctional materials.

The weight ratio of the crosslinker to polyfunctional material is from 3:1 to 1:40, and preferably the ratio is from 1:1 to 1:5. Generally, the weight percent of the crosslinker in the curable composition is from 2.5 to 75.

Optionally, the curable compositions of the invention may comprise cure catalysts to accelerate the curing process at a given temperature, or reduce the cure temperature at a given cure time. The catalyst, if present, is typically an acid selected from the group consisting of sulfonic, carboxylic, phosphoric, sulfuric, and nitric acids. The preferred acid catalysts are sulfonic acids, including benzenesulfonic acid, para-toluenesulfonic acid, naphthalenesulfonic acid, dinonylnaphthalenedisulfonic acid, dodecylbenzenesulfonic acid, methanesulfonic acid, and mixtures thereof. The weight ratio of the catalyst, when present, to the crosslinker in the curable composition is from 1:4 to 1:1,000, and the weight percent of catalyst in the curable composition is from 0.01 to 5.

The curable composition of the invention may optionally contain a liquid medium, which liquid medium may be used to aid the uniform application and transport of the curable composition. Any or all of the ingredients of the composition may be contacted with the liquid medium. Moreover, the liquid medium may permit formation of a dispersion, suspension, emulsion, invert emulsion, or solution of the curable composition ingredients, including other optional ingredients.

Particularly preferred is a liquid medium which is a solvent or a diluent for the curable composition ingredients. The preferred solvent or diluent is selected from the group consisting of water, alcohols, ketones, ethers, esters, aliphatic hydrocarbons, aromatic hydrocarbons, halogenated hydrocarbons, and mixtures thereof.

The weight percent of the optional liquid medium ranges from zero to 80 and the weight ratio of the liquid medium to the total weight of the ingredients of the composition ranges from 0.001 to 4.

Other optional ingredients include fillers, pigments, flow control agents, anticratering additives, antioxidants, stabilizing alcohols, ultraviolet light stabilizers, plasticizers, pigment wetting additives, levelling additives, mar-proofers, mold release agents, and corrosion inhibitors.

The curable compositions may be used to prepare coatings such as solution coatings, powder coatings, coil coatings and electrodeposition coatings. They may also be used as adhesives or molding compounds.

The curable compositions may be applied onto any one of a number of well-known substrates by spraying, padding, brushing, rollercoating, curtaincoating, flowcoating, electrocoating, dipping or electrostatic spraying. The applied curable composition is thereafter cured, typically at elevated temperatures, and preferably at a temperature in the range of from 80 °C to 160 °C within a period of, typically, 5 minutes to 1 hour to produce crosslinked films or objects.

The foregoing general discussion of this invention will be further exemplified by the following specific examples offered by way of illustration and not limitation thereof.

### EXAMPLE 1

### PREPARATION OF m-TMI/MELAMINE 1:1 ADDUCT

In a 2 liter three neck glass reactor equipped with agitator, thermometer, reflux condenser, nitrogen inlet and dropping funnel, 252 g (2 moles) of melamine was dispersed in 800 ml of DMSO (dimethylsulfoxide) under vigorous agitation. A solution of 423 g (2.1 moles) of m-TMI in 200 ml DMSO was added to the slurry at 110-113 °C in 3.5 hours. The reaction temperature was maintained for an additional hour. To maintain effective agitation, the thickening slurry was diluted several times during the reaction with a total of 150 ml of DMSO. After cooling to ambient temperature, the reaction mixture was filtered, the white solid was rinsed on a filter with THF (tetrahydrofuran) and reslurried in 800 ml of THF. After agitation at 64 °C for 80 minutes, the product was filtered, rinsed on the filter with THF and dried first in a hot air circulation oven at 60 °C overnight (16 hours), then in a vacuum oven (full pump vacuum) at 90-100 °C for 4 hours. The yield of the white solid product was 665 g. From the first filtrate 85 g and from the second (wash) 73 g of white solids were recovered. Infrared (IR) and Thermal Gravimetric Analysis (TGA) indicated that these products still contained 15-20% of DMSO.

The main product was characterized by NMR (Nuclear Magnetic Resonance), IR and thermal analysis. It was practically insoluble in most organic solvents, sparingly soluble in aprotic solvents such as DMSO, N-methyl-pyrrolidone, DMF (dimethylformamide). Both carbon and proton NMR, as well as the IR spectra were consistent with a 1:1 adduct structure. TGA indicated about a 20% weight loss in the range of 100-125 °C (DMSO). Major weight loss was observed above 245 °C. Major thermal event by DSC (differential scanning calorimetry) was an endotherm occurring in the temperature range in which the major weight loss is observed by TGA (extrap. onset: 223 °C). Liquidification was observed by TM (Thermal Microscopy) in the same range (onset 232 °C) and "boiling" started at 248 °C.

### EXAMPLE 2

### COPOLYMERIZATION OF m-TMI/MELAMINE ADDUCT

A glass reactor equipped with thermometer, stirrer, nitrogen inlet, dropping funnel and reflux condenser was charged with 16.4 g (0.05 moles) of the adduct of Example 1 and 40 g of N-methyl pyrrolidone. On heating the slurry to 125 °C a clear solution was formed. To the solution a mixture of 57.6 g (0.45 moles) of n-butylacrylate and 6.0 g catalyst (Lupersol® 575, available from the Lucidol division of Pennwalt Corporation, Philadelphia, PA) was added dropwise in 90 min. at 125-130 °C. Ten minutes later, an additional 0.5 g of catalyst, dissolved in 1.0 g of N-methyl pyrrolidone, was added and the reaction was continued for 20 minutes. On cooling, the copolymer precipitated from the solution; it was separated by filtration and purified by washing several times with hot methanol. After drying in a vacuum oven at 80-90 °C for 4 hours, 23 g of a white powdery solid was obtained. The infrared spectrum (IR) confirmed the expected copolymer structure. The copolymer was practically insoluble in most organic solvents and sparingly soluble in hot dimethyl sulfoxide (DMSO), N-methyl pyrrolidone and tetrahydrofuran (THF).

### EXAMPLE 3

### PREPARATION OF BUTOXYMETHYLATED COPOLYMERIC AMINOPLAST CROSSLINKING AGENT

At room temperature the reactor of Example 2 was charged with 15 g copolymer of Example 2 and 30 g of butylformcel (40% formaldehyde + 53% n-butanol + 7% water). The temperature of the viscous slurry was raised to 80 °C in 10 minutes. The moderately viscous, hazy solution formed was kept at 85 °C for an additional 15 minutes. The reaction water was removed by azeotropic distillation at 75-85 °C/ 32-50 kilo pascals (15-20 inches Hg). The slightly hazy, viscous resin solution was diluted with 12 g of n-butanol just before the addition of 0.1 ml 70% nitric acid. For the following 35 minutes the reaction mixture was kept at 70-75 °C and under vacuum, removing simultaneously 6 ml of distillate. Then the temperature was reduced to 50 °C and the acid catalyst was neutralized by addition of 0.20 ml of 25% caustic solution (pH = 7.6). The turbid solution was filtered at 60 °C/172 kilo pascals (25 psi) of nitrogen pressure. The "pan solid" content was 44%. For characterization, the resin was separated from the solution by precipitation in n-heptane and dried under vacuum at 50-60 °C for 5 hrs. The dry polymer was readily soluble in polar solvents, such as chloroform, tetrahydrofuran, and acetone. It was characterized by NMR and IR spectroscopy, HPSEC and thermal analysis. Proton and ¹³C NMR suggested the following composition:

[(TMIM)1.0 (nBuO)2.8]1.0 [nBuAc)_{1.4}

The Tg, determined by DSC, was 36 ± 2°C. TGA indicated a 5% weight loss at 187 °C and 10% weight loss at 223 °C.

The molecular weights (Mn, Mw) and polydispersity (Mw/Mn = D), determined by HPSEC, were Mn = 4075, Mw = 11211 and D = 2.75.

### Abbreviations:

- IR:: Infrared
- NMR:: Nuclear Magnetic Resonance
- HPSEC:: High Performance Size Exclusion Chromatography
- TMIM:: TMI/melamine 1:1 adduct
- nBuO:: Normal Butoxy Group
- nBuAc:: Normal Butyl Acrylate
- Tg:: Glass Transition Temperature
- DSC:: Differential Scanning Calorimetry
- TGA:: Thermal Gravimetric Analysis
- Mn:: Number Average Molecular Weight
- Mw:: Weight Average Molecular Weight

### EXAMPLE 4

The copolymeric aminoplast crosslinking agent of Example 3 was used to prepare the following cured coating systems:

### System 1: Acid catalyzed and cured with Joncryl® 500 acrylic resin, a product of S.C. Johnson and Son, Inc., Racine, Wisconsin.

| | |
|---|---|
| Joncryl® 500/Crosslinker of Example 3 | 70/30 |
| p-TSA, % on TRS | 0.3 |
| n-Butanol, % on TRS | 15 |
| % Nonvolatile | 50 |

### System 2: Acid catalyzed but without an active hydrogen-containing polyfunctional material to demonstrate the self-crosslinking ability of the aminoplast.

| | |
|---|---|
| Crosslinker of Example 3 | 100% |
| p-TSA, % on TRS | 0.3 |
| n-Butanol, % on TRS | 15 |
| % Nonvolatile | 41 |

### System 3: The crosslinker alone without acid catalyst to demonstrate self-crosslinking ability in the absence of a catalyst.

| | |
|---|---|
| Crosslinker of Example 3 | 100% |
| % Nonvolatile | 37 |
| Substrate | Bonderite® 100 CRS (zinc phosphate-treated cold rolled steel) |
| Applicator | #46 or #64 Wire Cator |
| Cure Schedules | 20 min at 100, 125 and 150 °C |
| TRS | Total Resin Solids |
| p-TSA | para-Toluenesulfonic Acid |

The film properties of the cured films are summarized in Table 1.

**TABLE 1**

| FILM PROPERTIES OF COATINGS PREPARED FROM THE NOVEL COPOLYMERIC AMINOPLAST OF EXAMPLE 3 | | | |
|---|---|---|---|
| | SYSTEM 1 | SYSTEM 2 | SYSTEM 3 |
| Cure Schedule: 20 min./100°C | | | |
| Film, µm (mils) | 35.6 (1.4) | 33 (1.3) | 33 (1.3) |
| KHN₂₅ | 2.5 | 7.3 | 4.0 |
| MEK Resist | 5/50 | 1/200* | 1/10 |
| * 10% removal of film. | | | |
| | | | |

| Cure Schedule: 20 minutes | 125°C | | |
|---|---|---|---|
| Film, µm (mils) | 30.5 (1.2) | 30.5 (1.2) | 33 (1.3) |
| KHN25 | 8.0 | 7.3 | 6.2 |
| MEK Resist | 100/175 | 200+* | 1/200 |
| * Difficult to scratch off after 200 double rubs. | | | |
| | | | |

| Cure Schedule: 20 minutes | 150°C | | |
|---|---|---|---|
| Film, µm | 31.75 | 31.75 | 31.75 |
| (mils) | (1.25) | (1.25) | (1.25) |
| KHN₂₅ | 9.8 | 10.8 | 7.0 |
| MEK Resist | 200+* | 200+ | 25/200+** |
| * Difficult to scratch off after 200 double rubs. | | | |
| ** Heavy scratching; difficult to scratch off after 200 double rubs. | | | |

### EXAMPLE 5

The procedure of Example 4 was repeated using a different ratio of JONCRYL® 500 to crosslinker than Example 3, namely, a 50/50 ratio instead of the 70/30 ratio used in Example 4, System 1.

The results are summarized in Table 2 and compared to the results of Example 4.

It is evident from the comparative results in Table 2 that a 50/50 JONCRYL® 500/Crosslinker ratio produces better cured films under a given set of conditions.

**TABLE 2**

| COMPARISON OF FILM PROPERTIES OF CURED FILMS AT DIFFERENT JONCRYL® 500 TO CROSSLINKER RATIOS | | | | | | |
|---|---|---|---|---|---|---|
| Cure Schedule | 20 Min./100°C | | 20 Min./125°C | | 20 Min./150°C | |
| JONCRYL® 500/CRSLKR RATIO | 70/30 | 50/50 | 70/30 | 50/50 | 70/30 | 50/50 |
| Film, µm | 35.6 | 33 | 30.5 | 33 | 31.75 | 33 |
| (mils) | (1.4) | (1.3) | (1.2) | (1.3) | (1.25) | (1.3) |
| KHN₂₅ | 2.5 | 5.5 | 8.0 | 8.5 | 9.8 | 11.0 |
| MEK Resistance | 5/50 | 25/200∗ | 100/175 | 200+ | 200+∗∗ | 200+ |

| | | | | | | |
|---|---|---|---|---|---|---|
| ∗ Heavy scratching | | | | | | |
| ∗∗ Difficult to scratch after 200 double rubs | | | | | | |

### EXAMPLE 6

### AN ALTERNATIVE METHOD FOR THE PREPARATION OF THE COPOLYMERIC AMINOPLASTS OF THE INVENTION

A. PREPARATION OF MIXED ALKOXYMETHYLATED MONOMERIC POLYMERIZABLE AMINOPLAST MONOMERS
A suitable reactor equipped with stirrer, reflux condenser and thermometer was charged with 120 g of butylformcel and the pH adjusted with 20% caustic to 10.1. Then 80 g of the product of Example 1 was added and the temperature of the slurry raised to 85 °C; after eight minutes a clear solution was formed. The temperature was maintained at 85-90 °C for an additional 30 minutes, then 84 g of n-butanol was added. At 65 °C, the pH was adjusted to 2.5 by addition of 0.5 ml of 70% nitric acid and the temperature was maintained for 20 minutes. During the following 35 minutes, 55 ml of distillate was removed at 65-68 °C and about 27 kilo pascals (200 mm Hg). The distillate was replaced by adding portionwise to the reactor the same amount of n-butanol. The reaction mixture was cooled to 35 °C and 1.25 ml 20% caustic added to adjust the pH to 9.6. The volatiles were stripped to 96 °C/about 13 kilo pascals (100 mm Hg) and 115 g of distillate was collected. At 55 °C, 96 g of methanol was charged followed by 0.5 ml of 70% nitric acid at 40 °C (pH=2.1), and the temperature was maintained at 40-43 °C for 40 minutes. After adjusting the pH to 9.5 with 1.2 ml of 20% caustic, 112 g distillate was removed at 12 kilo pascals (90 mm Hg) up to 95 °C. The 120 g of the colorless, moderately viscous resin obtained was diluted with 17 g of toluene and filtered at 80 °C under about 276 kilo pascals (approximately 2,000 mm Hg) pressure of nitrogen gas , to give a clear colorless resin having the following characteristics:

| | |
|---|---|
| HPSEC: | 81.7% Monomer (High Performance Size Exclusion Chromatography Areas) |
| | 14.8% Dimer (Areas) |
| | 3.5% Trimer (Areas) |
| NMR: | CH₃/CH₂ = 0.22 (ratio) |
| | nBu/CH₂ = 0.67 (ratio) |
| | CH₂/Adduct = 3.3 (ratio) |
| FREE CH₂O: | 0.55% (by weight) |
| FREE METHYLOL: | 2.48% (by weight) |
| SOLIDS: | Pan = 89.2% (by weight) |
| | Foil = 95.2% (by weight) |
| CH₂O/ADDUCT: | 3.12 (Ratio determined by bound formaldehyde and nitrogen analysis) |

B. COPOLYMERIZATION
The product of Example 6, Part A, when copolymerized with an unsaturated comonomer such as n-butyl acrylate, under the copolymerization conditions described in Example 2 for the copolymerization of the TMI/melamine adduct, should produce mixed alkoxy-methylated copolymeric aminoplast crosslinker of the invention.

## Claims

1. A copolymer comprising repeating units derived from:
(i) a monoadduct of isopropenyl-alpha, alpha-dimethylbenzyl isocyanate and an amino compound selected from the group consisting of melamines, guanamines, glycolurils, ureas, and the at least partially N-alkylolated and/or N-alkoxylated derivatives thereof, and oligomers thereof, and
(ii) an ethylenically unsaturated compound capable of copolymerizing with said monoadduct.

2. The copolymer of claim 1, characterized in that the isopropenyl-alpha, alpha-dimethylbenzyl isocyanate is selected from the group of isomers consisting of meta-, para-, and a mixture thereof.

3. The copolymer of claim 2, characterized in that the isopropenyl-alpha, alpha-dimethylbenzyl isocyanate is the meta- isomer.

4. The copolymer of claim 1, characterized in that the amino compound is selected from the group consisting of melamine, an alkoxyalkylated melamine, an alkylolated melamine and mixtures thereof.

5. The copolymer of one of the preceding claims, characterized in that the ethylenically unsaturated compound is selected from the group consisting of monosubstituted olefins, 1,1-disubstituted olefins, 1,2-disubstituted olefins, and a mixture thereof.

6. The copolymer of claim 5, characterized in that the olefin is selected from the group consisting of vinyl acetate, styrene, acrylic and methacrylic esters, acrylic and methacrylic nitrites, acrylic and methacrylic amides, vinyl chloride, vinylidene chloride, fumarate and maleate esters, cinnamate esters, maleic anhydride, maleimide, N-methyl maleimide, N-phenyl maleimide, and a mixture thereof.

7. The copolymer of one of the preceding claims, characterized in that it possesses a weight average molecular weight of from 500 to 20,000.

8. A copolymer comprising a plurality of the same or different segments represented by the formula: 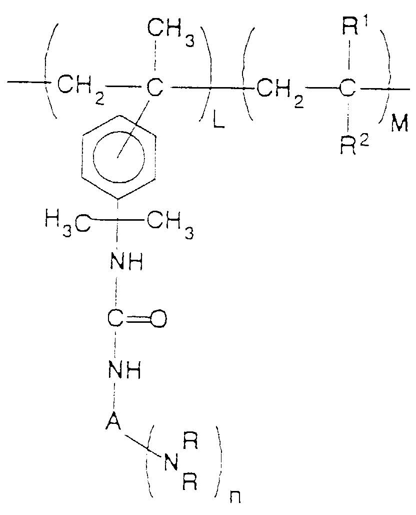 wherein
L and M are the same or different integers, each independently having a value of at least 1;
A is the core of an amino compound selected from the group consisting of melamines, guanamines, glycolurils, ureas, and the at least partially N-alkylolated and/or N-alkoxylated derivatives thereof, and oligomers thereof; each R is independently selected from H, an alkylol group and an alkoxyalkyl group;
R¹ and R² are the same or different and independently selected from the group consisting of hydrogen, cyano, halo, alkoxy, acetoxy, acyl, aminocarbonyl, N-alkylaminocarbonyl, N,N-dialkylaminocarbonyl, aryl, alkoxycarbonyl of 1 to 20 carbon atoms, aryloxycarbonyl of 6 to 20 carbon atoms, and aralkyloxycarbonyl of 7 to 20 carbon atoms; and
n is at least one.

9. The copolymer of claim 8, characterized in that each R group is independently selected from H, a methylol group and an alkoxymethyl group having from 1 to 6 carbon atoms in the alkoxy group.

10. The copolymer of claim 9, characterized in that each R group is independently selected from a methylol group and an alkoxymethyl group having from 1 to 6 carbon atoms in the alkoxy group.

11. The copolymer of claim 10, characterized in that substantially all of the R groups are alkoxymethyl groups having from 1 to 6 carbon atoms in the alkoxy group.

12. The copolymer of claim 8, characterized in that A is the core of the melamine, and each R group is independently selected from H, a methylol group and an alkoxymethyl group having from 1 to 6 carbon atoms in the alkoxy group.

13. The copolymer of one of claims 8 to 12, characterized in that it possesses a weight average molecular weight of from 500 to 20,000.

14. A process for preparing a copolymer as set forth in any one of claims 1 to 7, comprising the steps of:
(a) dissolving, in a liquid medium, the monoadduct to form a solution;
(b) adding to the solution (i) an unsaturated comonomer and (ii) a free radical initiator; and
(c) maintaining the reaction mixture at a temperature and for a length of time sufficient to copolymerize at least 90 weight percent of the adduct and the comonomer reactants.

15. The process of claim 14, characterized in that it further comprises the step of (d) contacting the product of step (c) with 1 to 30 moles of formaldehyde per mole of monoadduct.

16. The process of claim 15, characterized in that it further comprises the step of (e) contacting the product of step (d) with 1 to 30 moles of an alcohol per mole of monoadduct, under acidic conditions.

17. A curable composition comprising the copolymer as set forth in any one of claims 1 to 13.

18. The curable composition of claim 17, characterized in that it further comprises a polyfunctional active hydrogen-containing material.

19. A method for coating a substrate by contacting a substrate with a curable composition of claim 17 or claim 18 and thereafter curing.

## Patentansprüche

1. Ein Copolymer mit sich wiederholenden Einheiten, welche abgeleitet sind von:
(i) einem Monoaddukt aus Isopropenyl-α,α-dimethylbenzylisocyanat und einer Aminoverbindung, ausgewählt aus der Gruppe bestehend aus Melaminen, Guanaminen, Glykolurilen, Harnstoffen sowie deren wenigstens teilweise N-alkylolierten und/oder N-alkoxylierten Derivaten und Oligomeren davon, und
(ii) eine ethylenisch ungesättigte Verbindung, welche in der Lage ist, mit dem Monoaddukt zu copolymerisieren.

2. Copolymer nach Anspruch 1, dadurch gekennzeichnet, daß das Isopropenyl-α,α-dimethylbenzylisocyanat ausgewählt ist aus der Gruppe von Isomeren bestehend aus meta-Isomeren, para-Isomeren und Mischungen davon.

3. Copolymer nach Anspruch 2, dadurch gekennzeichnet, daß das Isopropenyl-α,α-dimethylbenzylisocyanat das meta-Isomer ist.

4. Copolymer nach Anspruch 1, dadurch gekennzeichnet, daß die Aminoverbindung ausgewählt ist aus der Gruppe bestehend aus Melamin, einem N-alkoxyalkylierten Melamin, einem alkylolierten Melamin und Mischungen davon.

5. Copolymer nach einem der vorhergehenden Ansprüche, dadurch gekennzeichnet, daß die ethylenisch ungesättigte Verbindung ausgewählt ist aus der Gruppe bestehend aus monosubstituierten Olefinen, 1,1-disubstituierten Olefinen, 1,2-disubstituierten Olefinen und einer Mischung davon.

6. Copolymer nach Anspruch 5, dadurch gekennzeichnet, daß das Olefin ausgewählt ist aus der Gruppe bestehend aus Vinylacetat, Styrol, Acryl- und Methacrylestern, Acryl- und Methacrylnitrilen, Acryl- und Methacrylamiden, Vinylchlorid, Vinylidenchlorid, Fumarsäure- und Maleinsäureester, Zimtsäureester, Maleinsäureanhydrid, Maleimid, N-Methylmaleimid, N-Phenylmaleimid und Mischungen davon.

7. Copolymer nach einem der vorhergehenden Ansprüche, dadurch gekennzeichnet, daß es ein mittleres Molekulargewicht von 500 bis 20.000 aufweist.

8. Copolymer mit einer Vielzahl von gleichartigen oder verschiedenen Segmenten, dargestellt durch die Formel 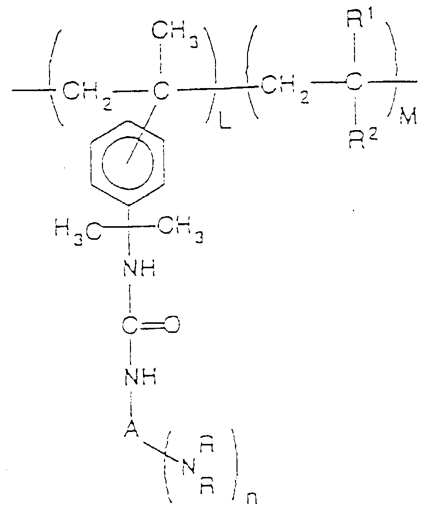 worin
L und M gleiche oder unterschiedliche ganze Zahlen sind, welche unabhängig voneinander jeweils einen Wert von wenigstens 1 aufweisen;
A der Kern einer Aminoverbindung ist, die ausgewählt ist aus der Gruppe bestehend aus Melaminen, Guanaminen, Glykolurilen, Harnstoffen und deren wenigstens teilweise N-alkylolierten und/oder N-alkoxylierten Derivaten und Oligomeren davon;
jedes R unabhängig aus einem Wasserstoffatom, einer Alkylolgruppe und einer Alkoxyalkylgruppe ausgewählt ist;
R¹ und R² gleich oder unterschiedlich sind und unabhängig ausgewählt sind aus der Gruppe bestehend aus einem Wasserstoffatom, einer Cyangruppe, einem Halogenatom, einem Alkoxyrest, einer Acetoxygruppe, einem Acylrest, einer Aminocarbonylgruppe, einem N-Alkylaminocarbonylrest, einem N,N-Dialkylaminocarbonylrest, einem Arylrest, einem Alkoxycarbonylrest mit bis 20 Kohlenstoffatomen, einem Aryloxycarbonylrest mit 6 bis 20 Kohlenstoffatomen und einem Aralkyloxycarbonylrest mit 7 bis 20 Kohlenstoffatomen; und
n wenigstens 1 ist.

9. Copolymer gemäß Anspruch 8, dadurch gekennzeichnet, daß jede Gruppe R unabhängig ausgewählt ist aus einem Wasserstoffatom, einer Methylolgruppe und einer Alkoxymethylgruppe mit 1 bis 6 Kohlenstoffatomen in der Alkoxygruppe.

10. Copolymer nach Anspruch 9, dadurch gekennzeichnet, daß jede Gruppe R unabhängig ausgewählt ist aus einer Methylolgruppe und einer Alkoxymethylgruppe mit 1 bis 6 Kohlenstoffatomen in der Alkoxygruppe.

11. Copolymer nach Anspruch 10, dadurch gekennzeichnet, daß im wesentlichen alle der Gruppen R Alkoxymethylgruppen mit 1 bis 6 Kohlenstoffatomen in der Alkoxygruppe sind.

12. Copolymer nach Anspruch 8, dadurch gekennzeichnet, daß A der Kern des Melamins ist und jede Gruppe R unabhängig ausgewählt ist aus einem Wasserstoffat om, einer Methylolgruppe und einer Alkoxymethylgruppe mit 1 bis 6 Kohlenstoffatomen in der Alkoxygruppe.

13. Copolymer nach einem der Ansprüche 8 bis 12, dadurch gekennzeichnet, daß es ein mittleres Molekulargewicht von 500 bis 20.000 aufweist.

14. Verfahren zur Herstellung eines Copolymers gemäß einem der Ansprüche 1 bis 7, welches folgende Schritte aufweist:
(a) Auflösung des Monoaddukts in einem flüssigen Medium zur Bildung einer Lösung;
(b) Versetzten der Lösung mit (i) einem ungesättigten Comonomer und (ii) einem freie Radikale bildenden Initiator;
(c) Halten der Reaktionsmischung auf einer Temperatur und über einen Zeitraum, die ausreichen, um wenigstens 90 Gew-% des Addukts und der Comonomerreaktanten zu copolymerisieren.

15. Verfahren nach Anspruch 14, dadurch gekennzeichnet, daß es als weiteren Schritt (d) das Kontaktieren des Produkts des Schrittes (c) mit 1 bis 30 Mol Formaldehyd pro Mol Monoaddukt umfaßt.

16. Verfahren nach Anspruch 15, dadurch gekennzeichnet, daß es als weiteren Schritt (e) das Kontaktieren des Produkts des Schrittes (d) mit 1 bis 30 Mol eines Alkohols pro Mol Monoaddukt unter sauren Bedingungen umfaßt.

17. Härtbare Zusammensetzung, welche das Copolymer gemäß einem der Ansprüche 1 bis 13 aufweist.

18. Härtbare Zusammensetzung nach Anspruch 17, dadurch gekennzeichnet, daß sie des weiteren ein polyfunktionelles aktiven Wasserstoff enthaltendes Material aufweist.

19. Verfahren zur Beschichtung eines Substrats durch Kontaktierung eines Substrats mit einer härtbaren Zusammensetzung nach Anspruch 17 oder Anspruch 18 mit anschließendem Härten.

## Revendications

1. Copolymère comprenant des motifs répétitifs dérivés :
(i) d'un produit de monoaddition de l'isopropényl-alpha, alpha-diméthylbenzyl isocyanate et d'un composé aminé choisi dans le groupe constitué par les mélamines, les guanamines, les glycoluriles, les urées et leurs dérivés au moins partiellement N-a!kylolés et/ou N-alcoxylés et leurs oligomères; et
(ii) d'un composé éthyléniquement insaturé apte à se copolymériser avec ledit produit de monoaddition.

2. Copolymère selon la revendication 1, caractérisé en ce que l'isopropényl-alpha, alpha-diméthylbenzyl isocyanate est choisi dans le groupe des isomères constitué de l'isomère méta, de l'isomère para et de leurs mélanges.

3. Copolymère selon la revendication 2, caractérisé en ce que l'isopropényl-alpha, alpha-diméthylbenzyl isocyanate est l'isomère méta.

4. Copolymère selon la revendication 1, caractérisé en ce que le composé aminé est choisi dans le groupe constitué de la mélamine, d'une mélamine alcoxyalkylée, d'une mélamine alkylolée et de leurs mélanges.

5. Copolymère selon l'une quelconque des revendications précédentes, caractérisé en ce que le composé éthyléniquement insaturé est choisi dans le groupe constitué des oléfines monosubstituées, des oléfines disubstituées en 1,1, des oléfines disubstituées en 1,2 et de leurs mélanges.

6. Copolymère selon la revendication 5, caractérisé en ce que l'oléfine est choisie dans le groupe constitué de l'acétate de vinyle, du styrène, des esters acryliques et méthacryliques, des nitriles acryliques et méthacryliques, des amides acryliques et méthacryliques, du chlorure de vinyle, du chlorure de vinylidène, des esters fumarates et maléates, des esters cinnamates, de l'anhydride maléique, du maléimide, du N-méthylmaléimide, du N-phénylmaléimide et de leurs mélanges.

7. Copolymère selon l'une quelconque des revendications précédentes, caractérisé en ce qu'il possède une masse moléculaire moyenne en poids comprise entre 500 et 20 000.

8. Copolymère comprenant une pluralité de segments identiques ou différents représentés par la formule : 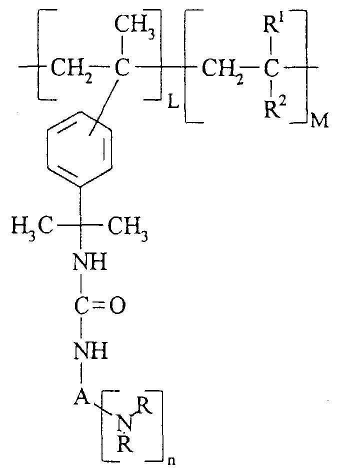 dans laquelle
L et M sont des entiers identiques ou différents, chacun ayant indépendamment une valeur égale à au moins 1 ;
A est le squelette d'un composé aminé choisi dans le groupe constitué par les mélamines, les guanamines, les glycoluriles, les urées et leurs dérivés au moins partiellement N-alkylolés et/ou N-alcoxylés et leurs oligomères ; chaque R est indépendamment choisi parmi H, un groupe alkylol et un groupe alcoxyalkyle ;
R' et R² sont identiques ou différents et sont indépendamment choisis dans le groupe constitué par hydrogène, cyano, halogène, alcoxy, acétoxy, acyle, aminocarbonyle, N-alkylaminocarbonyle, N,N-dialkylaminocarbonyle, aryle, alcoxycarbonyle ayant de 1 à 20 atomes de carbone, aryloxycarbonyle ayant de 6 à 20 atomes de carbone et aralcoxycarbonyle ayant de 7 à 20 atomes de carbone ; et
n est au moins égal à un.

9. Copolymère selon la revendication 8, caractérisé en ce que chaque groupe R est indépendamment choisi parmi H, un groupe méthylol et un groupe alcoxyméthyle ayant de 1 à 6 atomes de carbone dans le groupe alcoxy.

10. Copolymère selon la revendication 9, caractérisé en ce que chaque groupe R est indépendamment choisi parmi un groupe méthylol et un groupe alcoxyméthyle ayant de 1 à 6 atomes de carbone dans le groupe alcoxy.

11. Copolymère selon la revendication 10, caractérisé en ce que pratiquement tous les groupes R sont des groupes alcoxyméthyle ayant de 1 à 6 atomes de carbone dans le groupe alcoxy.

12. Copolymère selon la revendication 8, caractérisé en ce que A est le squelette de la mélamine et chaque groupe R est indépendamment choisi parmi H, un groupe méthylol et un groupe alcoxyméthyle ayant de 1 à 6 atomes de carbone dans le groupe alcoxy.

13. Copolymère selon l'une quelconque des revendications 8 à 12, caractérisé en ce qu'il possède une masse moléculaire moyenne en poids comprise entre 500 et 20 000.

14. Procédé pour la préparation d'un copolymère, tel qu'indiqué dans l'une quelconque des revendications 1 à 7, comprenant les étapes suivantes :
(a) dissolution, dans un milieu liquide du produit de monoaddition pour former une solution ;
(b) addition à la solution (i) d'un comonomère insaturé et (ii) d'un initiateur de radicaux libres ; et
(c) maintien du mélange réactionnel à une température et pendant une durée suffisantes pour copolymériser au moins 90 pour cent en poids du produit d'addition et des réactifs comonomères.

15. Procédé selon la revendication 14, caractérisé en ce qu'il comprend de plus l'étape (d) de mise en contact du produit de l'étape (c) avec 1 à 30 moles de formaldéhyde par mole de produit de monoaddition.

16. Procédé selon la revendication 15, caractérisé en ce qu'il comprend de plus l'étape (e) de mise en contact du produit de l'étape (d) avec 1 à 30 moles d'un alcool par mole de produit de monoaddition, dans des conditions acides.

17. Composition durcissable comprenant le copolymère tel qu'indiqué dans l'une quelconque des revendications 1 à 13.

18. Composition durcissable selon la revendication 17, caractérisée en ce qu'elle comprend de plus une substance polyfonctionnelle contenant des hydrogènes actifs.

19. Procédé pour enduire un substrat par mise en contact du substrat avec une composition durcissable selon la revendication 17 ou la revendication 18 et ensuite par durcissement.
